# EUROPÄISCHE PATENTSCHRIFT

(11) **EP 1 205 131 B1**
(45) Veröffentlichungstag und Bekanntmachung des Hinweises auf die Patenterteilung: **15.07.2009**
(21) Anmeldenummer: 01126837.2
(22) Anmeldetag: 10.11.2001
(51) Int. Cl.: A47C 27/14

(54) **Schaumelement mit Hohlräumen**
Foamed element with cavities
Elément en mousse avec des creux

(30) Priorität: 10.11.2000 DE 10055747
(43) Veröffentlichungstag der Anmeldung: 15.05.2002
(73) Patentinhaber: Mankau, Dieter, Prof., 60316 Frankfurt (DE)
(72) Erfinder: Mankau, Dieter, Prof., 60316 Frankfurt (DE)
(74) Vertreter: Jochem, Bernd

(56) Entgegenhaltungen:
- DE-A- 3 249 598
- DE-A- 19 700 131
- DE-A- 19 700 132
- US-A- 6 061 856

## Beschreibung

Die Erfindung betrifft ein Schaumstoffelement, insbesondere für Matratzen und Sitzmöbel aus PU-Schaum oder Latex, mit nach außen im wesentlichen geschlossenen Hohlräumen sowie ein Verfahren und eine Vorrichtung zum Herstellen eines Schaumstoffelements gemäss Oberbegriff der Ansprüche 8, 13, 14 und 18.

Schaumstoffelemente der genannten Art kommen insbesondere bei Matratzen oder Sitzmöbeln als Kernmaterial zum Einsatz, das in der Regel von einem Stoff- oder Lederbezug überzogen ist. Es ist z. B. aus der US 6 061 856 bekannt, die Härte eines Schaumstoffelements örtlich unterschiedlich zu gestalten, indem Hohlkörper in Hohlräume des Schaumstoffelements eingesetzt werden. Hierdurch können z.B. Matratzenelemente an verschiedenen Zonen unterschiedliche Härtegrade aufweisen und so der Kontur eines menschlichen Körpers angepasst werden. Entsprechende Hohlräume sind dabei insbesondere im Kopf-, Schulter- oder im Beckenbereich vorgesehen, in denen der Körper tiefer einsinkt als in den übrigen Bereichen.

Bislang wurden, wie z. B. in der US 6 061 856, der DE 197 00 131 A1 und der DE 197 00 132 A1 beschrieben, solche Hohlräume, ggf. nach dem Einsetzen von Hohlkörpern, durch Zusammenlegen zweier Matratzenlagen mit an der Oberfläche befindlichen Ausnehmungen, die nachträglich ausgeschnitten oder in der Form mitgeschäumt wurden, erzeugt, wobei die Matratzenlagen durch Verkleben oder durch formschlüssige Verbindung anschliessend fest miteinander verbunden wurden. Wesentliche Nachteile waren hierbei der entsprechende Herstellungsaufwand sowie der begrenzte Gestaltungsspielraum der Hohlräume. Bei einer aus der DE 32 49 598 bekannten Schaumstoffmatratze werden nachträglich in zylindrische Bohrungen aufblasbare Doppelschläuche eingesetzt, die nur einen Teil des Querschnitts der Bohrungen ausfüllen, so daß diese auch als Belüftungsöffnungen fungieren können.

Eine andere Möglichkeit zur Bildung von Hohlräumen war das Einbringen von festen Hohlkörpern in das zu schäumende Material, die nach dem Aushärten des Materials wieder aus dem Schaumstoffelement herausgezogen wurden. Die verbleibenden Hohlräume waren jedoch sehr klein, da sie einen relativ breiten Kanal zur Oberfläche der Matratze benötigten.

Es ist daher die Aufgabe der vorliegenden Erfindung, mittels eines einfacheren Herstellungsverfahrens und einer zweckmäßigen Vorrichtung ein Schaumstoffelement mit nach außen im wesentlichen geschlossenen Hohlräumen zu schaffen, das die vorstehend genannten Nachteile des Standes der Technik vermeidet und weitere Vorteile erzielt.

Gelöst wird diese Aufgabe durch die in den unabhängigen Ansprüchen angegebenen Merkmale. Weitere Ausgestaltungen ergeben sich aus den Unteransprüchen. Die Druckfestigkeit des erfindungsgemässen Schaumstoffelements wird durch Hohlkörper variiert, die bei der Herstellung in eine Matratzenform eingelegt und anschliessend vom Material des Schaumstoffelements umschäumt werden. Ein geeigneter Hohlkörper ist dabei ein von einer Aussenhaut umschlossener Körper oder einer, der aus einem porösen Material besteht, also viele innere Hohlräume aufweist. Gemäss einer ersten Ausführungsform verbleiben die Hohlkörper im Schaumstoffelement, wodurch ein einstückiger Schaumstoffkörper mit einer örtlich unterschiedlichen Festigkeitsverteilung ermöglicht wird. In besonderen Anwendungsfällen können auch zwei- oder mehrteilige Schaumstoffelemente erstellt werden. Die Hohlkörper werden bevorzugt in Zonen angeordnet, die üblicherweise höheren Belastungen durch einen Benutzer ausgesetzt sind oder besondere Komfortzonen darstellen.

Die ertindungsgemässen Hohlkörper sind vorzugsweise mit Fluid bzw. Luft gefüllt und haben eine Umhüllung aus einem dünnen flexiblen Material, wie etwa Kunststofffolie, insbesondere aus PU oder PE oder auch aus Gummi, Teflon, Silikon oder Latex, mit oder ohne Verstärkungsgewebe.

Gemäss einer speziellen Ausgestaltung bestehen die Hohlkörper aus einer dünnwandigen Styroporhülle, die nach der Fertigstellung des Schaumstoffelements durch Druck oder Hitzeeinwirkung von aussen zerstört wird, wodurch die Wandung des Hohlkörpers zerbröselt bzw. das Styropor schmilzt und sich perlenförmig zusammenzieht. Die einzelnen Styroporteilchen verbleiben in den Hohlräumen und sind nicht weiter störend. Auch die aus Folienmaterial bestehenden Hohlkörper können wahlweise durch Eindrücken oder Einstechen zerstört werden.

Die Hohlkörper können mit unterschiedlichen Fluiden oder unterschiedlich stark mit demselben Fluid gefüllt sein. Bei Verwendung eines elastischen Materials für die Umhüllung der Hohlkörper kann deren Grösse durch unterschiedlich starkes Aufpumpen variiert werden.

Die erzeugten Hohlräume liegen vorzugsweise so weit unter der Oberfläche des Schaumstoffelements, dass die Oberfläche auch bei starken Belastungen nicht einreisst.

Die Hohlkörper sind vorzugsweise kugelförmig, können jedoch jede beliebige andere Form und Grosse aufweisen. Die Anordnung und Ausrichtung der Hohlkörper im Schaumstoffelement kann variieren, um unterschiedliche Härtezonen zu erhalten. Mit einer Anordnung beispielsweise abwechselnd in Längs- und Querrichtung oder in verschiedenen Tiefen lässt sich eine gezielt ergonomische Festigkeitsverteilung erreichen.

Die Festigkeit des exfindungsgemässen Schaumstoffelements wird im wesentlichen durch vier Faktoren bestimmt: Grösse der Hohlkörper, Abstand der Hohlkörper voneinander, Form der Hohlkörper und Tiefe, in der sich die Hohlkörper im Schaumstoffelement befinden. Die einzelnen Parameter können nach Bedarf variiert oder miteinander kombiniert werden.

Die Hohlkörper werden vorzugsweise auf Haltern in Position gehalten, wie z.B. dünnen Stäben oder Nadeln, die ein- oder zweiseitig in der Schäumform angeordnet sind und die nach dem Aushärten des Schaumstoffmaterials aus dem Schaumstoffkörper herausgezogen werden. Die im Schaumstoffkörper verbleibenden Kanäle bilden Lüftungskanäle zu den Hohlräumen bzw. zur Oberfläche der Matratze. Gemäss einer weiteren Ausgestaltung der Erfindung werden die dabei entstehenden Hohlräume mit einem anderen Schaumstoffmaterial, dass entsprechend der gewählten Produktausführung unterschiedliche Härte haben kann, ausgeschäumt. Für einen besonders anspruchsvollen Liege -oder Sitzkomfort können die Hohlräume auch mit einem Gel gefüllt werden. Die Hohlräume können ggf. auch mit Vlies, Haar, insbesondere Rosshaar etc. nachträglich befüllt werden. Damit lässt sich nicht nur die Härte des Schaumstoffelements den individuellen Bedürfnissen einer Person anpassen, sondern auch die Durchlüftung und Feuchtigkeitsregulierung optimieren.

Eine rationelle und kostengünstige Lösung für das Einbringen von Hohlräumen in den Schaum ist die Verwendung von grossflächigen Luftpolster- oder Luftkammerfolien mit in Grösse, Form und Anordnung zweckentsprechend gewählten Hohlkörpern. Dabei sind die Hohlkörper der Luftpolsterfolie abgeschlossen, während die der Luftkammerfolie über eingeschweisste Verbindungskanäle miteinander verbunden sind und während des Aufschäumprozesses gemeinsam aufgeblasen oder mit Flüssigkeit gefüllt werden.

Dieser Vorgang kann auch pulsierend geschehen, damit bei schwierigen Ausformungen der Hohlkörper der Schaum besser um die Hohlkörper fliesst.

Die Luftpolster- oder Luftkammerfolie kann in einem Stück oder in Teilsegmenten in die Schäumform eingebracht werden.

Das Einbringen der Luftpolster- oder Luftkammerfolie in die Schäumform geschieht vorzugsweise über elastische Spannschnüre, die an der Folie und der Schäumform angebracht werden. Dadurch wird sichergestellt, dass die Folie mit den integrierten Hohlkörpern unter ständiger Vorspannung in der Schäumform gehalten und umschäumt wird. Die Luftpolster- oder Luftkammerfolie weist vorzugsweise Durchbrüche zwischen den einzelnen Hohlkörpern auf, durch die der Schaum beim Schäumvorgang fliessen kann und eine Schaumverbindung zwischen der jeweiligen Ober- und Unterseite der Folie entsteht. Werden Blockschäume hergestellt, aus denen z.B. die entsprechenden Schaumelemente für Matratzen geschnitten werden, wird die Luftpolster- oder Luftkammerfolie in entsprechenden Abständen zueinander in die Schäumform eingespannt. Nach dem Aufschäumen bzw. dem Aushärten des Schaumblocks werden die einzelnen Matratzenkerne verschnittfrei aus dem Schaumblock geschnitten. Im Blockschaumverfahren können auch Hohlkörper eingesetzt werden, die einzeln aufblasbar sind.

Eine weitere vorteilhafte Anwendung der Luftpolster- und/ oder Luftkammerfolie ist die Anwendung in automatisierten Produktionsprozessen, wie z.B. bei der Endlosfertigung von Schaumsträngen. In diesen Produktionsprozessen kann die Luftpolster- und/oder die Luftkammerfolie von der Rolle abgerollt, an seitlichen mitlaufenden Folien oder Wänden befestigt, in den Endlosschaumstrang eingebracht werden. Das gleiche gilt auch für das Einbringen einer Verstärkungschicht, z.B. eines Netzes, das über den Hohlkörpern bzw. über und unter den Hohlkörpern verläuft. Die Hohlräume in der Luftkammerfolie können auch mit einem anderen Schaumstoffmaterial ausgeschäumt werden. Entsprechend der Produktausführung kann die gewählte Härte gegenüber dem für die Matratze verwendeten Formschaum härter oder weicher gewählt werden. Die Ausformung der Hohlkörper kann so gestaltet sein, dass eine dem Lattenrost ähnLiche Strucktur in der Matratze entsteht, und daß die Hohlräume, die durch die Hohlkörper gebildet werden, mit einem härteren Schaum als der Schaum der die Matratze bildet ausgeschäumt werden. Für einen besonders anspruchsvollen Liege- oder Sitzkomfort können die Hohlräume auch mit einem Gel gefällt werden.

Bei einer zweiten Ausführungsform der Erfindung werden die im Schaumstoffelement befindlichen Hohlräume durch Hohlkörper hergestellt, die aus einer flexiblen aufblasbaren Hülle bestehen. Diese, im weiteren variable Hohlkörper genannt, werden bei der Herstellung des Schaumstoffelements mit einem Fluid bzw. Luft gefüllt, dann umschäumt und nach dem Aushärten des Schaumstoffmaterials wieder entfernt.

Je nach Innendruck können verschieden grosse Hohlräume erzeugt werden.

Zum einfachen Evakuieren der variablen Hohlkörper zieht sich die Hülle zusammen und löst sich von der Wandung des Hohlraumes. Es entsteht nur ein sehr kleiner Entnahmekanal im Schaumstoffelement, der entweder bereits durch die Eigenelastizität des Schaumstoffmaterials oder durch Einsetzen kleiner Verschlusselemente verschlossen werden kann. Gegebenenfalls kann die Öffnung auch verklebt werden. Um ein besseres Ablösen des variablen Hohlkörpers von der Innenwandung des Hohlraumes zu erreichen, besteht das Wandmaterial des variablen Hohlkörpers entweder aus einem Material mit abstossenden Eigenschaften oder ist entsprechend mit einem Trennmittel beschichtet.

Gemäss einer Ausgestaltung der Erfindung hat der variable Hohlkörper einen dünnen Schaftabschnitt und einen grossvolumigen Grundkörper, der im aufgeblasenen Zustand einen entsprechenden Hohlraum im Schaumstoffelement erzeugt.

Der Schaftabschnitt ist dabei so lang, dass der Grundkörper ausreichend tief im Schaumstoffelement angeordnet ist und das Schaumstoffelement auch bei stärkerer Belastung nicht an der Oberfläche einreisst.

Der Durchmesser des Schaftabschnitts ist vorzugsweise höchstens ein Drittel so gross wie die maximale Abmessung des Grundkörpers und beträgt vorzugsweise nicht mehr als 1 cm, insbesondere 0,5cm. Gemäss einer anderen Ausgestaltung der Erfindung hat der variable Hohlkörper einen Grundkörper aus mehreren bauchigen Abschnitten, die von eingeschnürten Abschnitten unterteilt sind, so dass sich nach Entfernen des variablen Hohlkörpers ein ebenso strukturierter Hohlraum ergibt. An den eingeschnürten Abschnitten kann die Hülle des variablen Hohlkörpers eine dickere Wandstärke aufweisen oder entsprechend verstärkt, insbesondere gewebeverstärkt, sein. Alternativ kann auch die gesamte Hülle des variablen Hohlkörpers, vorzugsweise aber nur die des Grundkörpers, eine Wandstärke aufweisen, die auch Drücken von über 10 bar standhält, die beim Schäumen von Überdruckschaum auftreten.

Der noch nicht aufgeblasene variable Hohlkörper kann durch einen im Inneren am Schaftabschnitt angebrachten Draht oder ein Rohr in seiner Ausrichtung gehalten werden. Bei grösseren oder komplex geformten variablen Hohlkörpern kann um den Draht oder das Rohr eine bürstenartige Struktur aus Kunststoffborsten angebracht sein, die sich beim Herausziehen des variablen Hohlkörpers aus dem Schaum umlegen, so dass ein leichtes Herausziehen gewährleistet ist. Bezüglich Anordnung und Ausformung der variablen Hohlkörper gelten die gleichen Grundsätze, die vorstehend beschrieben wurden. Auch kann durch unterschiedliche Auslegung oder Anordnung der Hohlkörper bzw. variablen Hohlkörper an gegenüberliegenden Seiten einer Matratze eine sogenannte Wendematratze mit auf beiden Seiten unterschiedlichen Härteeigenschaften hergestellt werden.

Desweiteren können variable Hohlkörper vorgesehen sein, die von einer bis zur anderen Seite vertikal oder horizontal durch die Matratze hindurchgehen und die zum Beispiel auf beiden Seiten eine Fluideinlassöffnung haben können. In diesem Fall sind die variablen Hohlkörper schlauchartig aufgebaut, insbesondere mit mehreren bauchartig verdickten Abschnitten, die durch kurze dünne Schlauchstücke miteinander verbunden sind. Die verdickten Abschnitte sind insbesondere rotationssymmetrisch. Bei Matratzen die eine hohe Durchlüftung benötigen, wie z.B. im Pflegebereich, haben die variablen Hohlkörper auf der dem Schaftabschnitt gegenüberliegenden Seite eine kegelförmige Erhöhung, die im aufgeblasenen Zustand mit ihrer Spitze die Schäumform reibschlüssig berührt. Ist der variable Hohlkörper aus dem Schaum entfernt, entsteht ein Lüftungskanal von der Unterseite zur Liegeseite der Matratze.

Bei einer speziellen Ausgestaltung befindet sich an den variablen Hohlkörpern jeweils mindestens ein auf Überdruck reagierendes Auslassventil, insbesondere am grossvolumigen Grundkörper. Das Ventil öffnet sich ab einem bestimmten Überdruck, z.B. von 2 bar, so dass das im variablen Hohlkörper befindliche Fluid bzw. die Luft nach aussen dringen kann. Dadurch löst sich die Umhüllung des variablen Hohlkörpers von der Innenwand des Hohlraumes, so dass die variablen Hohlkörper wesentlich besser aus der Matratze herausgezogen werden können.

Weiterhin kann die Härte und Druckverteilung, die beim Schlafen oder Sitzen ein wichtiges Kriterium darstellt, neben dem Anordnen von Hohl- bzw. variablen Hohlkörpern zusätzlich durch schichtartige Einlagen im Schaum bestimmt werden. Diese Einlagen bestehen insbesondere aus einem Gewebe mit Durchbrüchen oder einem Gitterstrukturnetz aus Kunststoff oder Naturfasern, das wahlweise auch elastisch sein kann und vorzugsweise über den Hohlräumen unterhalb der Sitz- oder Schlafebene angeordnet ist.

Die Erfindung wird nachstehend anhand der Zeichnung beispielhaft näher erläutert. Es zeigen:
- Fig. 1: einen horizontalen Längsschnitt durch ein erfindungsgemässes Schaumstoffele- ment mit Hohlräumen;
- Fig. 2: eine Detailansicht eines Hohlraums mit einem darin befindlichen Hohlkörper;
- Fig. 3: einen vertikalen Längsschnitt durch ein erfindungsgemässes Schaumstoffelement mit einer Luftpolster- oder einer Luft- kammerfolie;
- Fig. 4: einen horizontalen Längsschnitt durch ein erfindungsgemässes Schaumstoffele- ment mit unterschiedlich angeordneten Hohlräumen und unterschiedlichen Grös- sen der Hohlräume, wie sie beispielhaft bei der Anwendung von Luftpolster- oder Luftkammerfolie realisiert werden kön- nen;
- Fig. 5: einen vertikalen Längsschnitt durch ein erfindungsgemässes Schaumstoffelement mit unterschiedlichen variablen Hohl- körpern im aufgeblasenen Zustand und beispielhaft einer Zwischenlage aus Filz zwischen zwei variablen Hohlkör- pern.

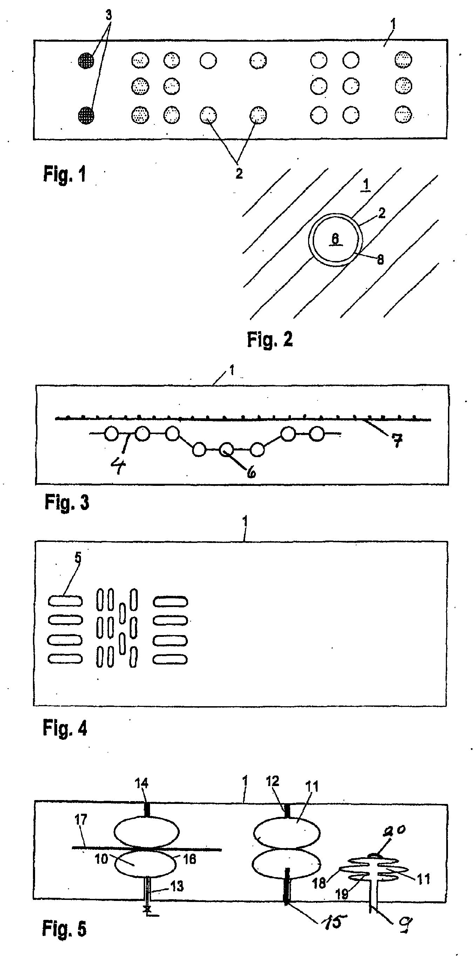

Das in Fig. 1 dargestellte Schaumstoffelement 1 umfasst mehrere Hohlräume 2 in bereichsdifferenzierter Anordnung. Hierdurch wird erreicht, dass die Härte in den verschiedenen Belastungszonen des Schaumstoffelements unterschiedlich ist.

In den Hohlräumen befinden sich Hohlkörper 6, die nach dem Aushärten des Schaumstoffelements mechanisch zerstört werden. Der verbleibende Hohlraum kann auch mit einem Schaumstoffmaterial ausgespritzt werden, das eine andere Härte als der umgebende Schaum aufweist.

Der Hohlkörper 6 bzw. dessen Bruchstücke verbleiben dauerhaft im Schaumstoffelement 1, was keinen negativen Einfluss auf die Funktionalität des Schaumstoffelements hat. Wahlweise können die Hohlkörper 6 auch aus einem Material bestehen, das sich nach Fertigstellung des Schaumstoffelements durch Wasser oder durch ein spezielles Lösungsmittel auflösen und herauswaschen läßt.

Wie in Fig. 3 dargestellt ist, kann alternativ zu einzelnen Hohlkörpern 6 eine zusammenhängende Luftpolster- oder Luftkammerfolie 4 mit Hohlkörpern 6 in das Schaumstoffelement eingesetzt werden. Durch ausschliessliches Anordnen der Luftpolster- oder Luftkammerfolie 4 in stärker belasteten Bereichen, wie z.B. der Kopf-Schulterzone oder dem Beckenbereich, kann dort die Elastizität einer Matratze wesentlich verbessert werden. Die Luftpolster- oder Luftkammerfolie 4 kann sich auch über den gesamten Bereich des Schaumstoffelements 1 erstrecken. In diesem Fall ist es vorteilhaft, wenn die Luftpolster- oder Luftkammerfolie 4 Durchbrüche aufweist, durch die Schaumstoffmaterial während des Schäumens hindurchtreten kann, um eine Verbindung der Oberseite mit der Unterseite zu ermöglichen.

Zur Anpassung an unterschiedlich starke Belastungen kann die Luftpolster- oder Luftkammerfolie 4 mit den Hohlkörpern 6 gemäß Fig. 3 in verschiedenen Abständen zur Oberfläche durch das Schaumstoffelement(1) verlaufen.

Wie in Fig. 4 dargestellt, kann eine örtlich unterschiedliche Elastizität des Schaumstoffelements 1 auch dadurch erreicht werden, dass die Hohlkörper 6 in unterschiedlicher Richtung ausgerichtet werden. Im vorliegenden Fall sind längliche, unterschiedlich grosse Hohlkörper abwechselnd in Längs- und Querrichtung 5 angeordnet.

Fig. 5 zeigt ein erfindungsgemässes Schaumstoffelement 1 mit mehreren im Inneren des Schaumstoffelements liegenden Hohlräumen 11. Diese werden durch variable Hohlkörper 10 erzielt, die nach dem Aushärten des Schaumstoffs aus dem Element herausgezogen werden. Die variablen Hohlkörper 10 umfassen einen grossvolumigen blasenartigen Grundkörper 16 und einen schmalen schlauchförmigen Schaftabschnitt 13. Die Aussenwandung 16 des Grundkörpers besteht vorzugsweise aus einem flexiblen Kunststoffmaterial, wie z.B. Gummi, Silikon oder Latex. Das Material ist so ausgelegt, dass es dem Druck standhält, der beim Schäumen des Schaumstoffs entsteht. Zur Herstellung eines entsprechenden Schaumstoffelements werden die variablen Hohlkörper 10 in aufgeblasenem Zustand in einer Schäumform in Position gehalten und vom Schaumstoffmaterial umschäumt. Der Grad der Füllung der variablen Hohlkörper 10 bestimmt dabei die Grösse der später erhaltenen Hohlräume 11. Werden relativ grosse oder komplexe variable Hohlkörper 10 benutzt, werden sie im evakuierten Zustand umschäumt und erst dann aufgeblasen. Durch die gesteuerte kontinuierliche Vergrösserung der variablen Hohlkörper 10 im noch nicht ausgehärteten Schaum entstehen durch die Verdrängung des Schaumes Komprimierungen in der Randzone der gebildeten Hohlräume 11. Diese Bereiche wirken wie zusätzlich eingeschäumte Kunststofffedern. Diese Ausführungsform ist besonders in Schaumteilen für Autositze oder Bürostühle vorteilhaft, die einer harten Beanspruchung im Gebrauch unterliegen. Zur Verbesserung des Fliessverhaltens des Schaums um den variablen Hohlkörper 10 kann der Auffüllvorgang pulsierend erfolgen. Nach dem Aushärten des Schaumstoffmaterials wird das in den variablen Hohlkörpern 10 befindliche Fluid bzw. die Luft ausgeLassen, so dass sich die flexible Aussenwandung des Grundkörpers 16 zusammenzieht und aus dem durch den Schaftabschnitt 12 gebildeten Entnahmekanal einfach herausgezogen werden kann. Neben variablen Hohlkörpern 10, die entsprechend dem jeweiligen Innendruck ihre Grösse variabel verändern können, können variable Hohlkörper 10 eingesetzt werden, die in ihrer Ausdehnung begrenzt sind, indem die variablen Hohlkörper ein eingearbeitetes Gewebe besitzen.

Um beim Evakuieren der variablen Hohlkörper 10 zu verhindern, dass sich die Innenwände der Umhüllung berühren und dadurch einen dahinter liegenden Abschnitt des variablen Hohlkörpers 10 verschlissen, der noch nicht vollständig evakuiert ist, hat die Innenwand der variablen Hohlkörper 10 eine rauhe Oberfläche, oder im Inneren des variablen Hohlkörpers 10 befindet sich ein bürstenähnliches Element, das auch den variablen Hohlkörper 10 in einer ausgerichteten Position hält. Dadurch können sich die gegenüberliegenden Innenwände nicht vollständig dicht aufeinander legen und es kann das Fluid bzw. die Luft vollständig abgesaugt werden.

Das Material des Grundkörpers 16 besteht vorzugsweise aus einem Material, dass sich nach dem Schäumen leicht vom Hohlraum 11 ablösen lässt und insbesondere nicht an der Innenseite des Hohlraums festklebt. Die Aussenseite des Grundkörpers 16 kann auch mit einer Anti-Haft-Beschichtung versehen sein.

Im Verhältnis zur grössten Abmessung des Hohlraums 11 hat der Entnahmekanal 12 einen wesentlich kleineren Durchmesser und ist insbesondere höchstens ein Drittel, vorzugsweise höchstens ein Viertel so gross wie die grösste Abmessung des Hohlraums 11.

Wie in Fig. 5 in der linken Bildhälfte gezeigt, ragen die variablen Hohlkörper 10 von beiden Selten in das Schaumstoffelement 1 hinein, sodass sich die Grundkörper 16 der variablen Hohlkörper 10 nahezu berühren. Zwischen den gegenüberliegenden Grundkörpern 16 ist ein luftdurchlässiges Schichtmaterial 17 angeordnet, das eine Luftzirkulation von der einen Seite zur anderen Seite des Schaumstoffelements 1 erlaubt. Bei dem Schichtmaterial handelt es sich vorzugsweise um ein Material aus Naturstoffen, wie z.B. Vlies, Haar, insbesondere Rosshaar etc. Das verwendete Material hat dabei vorzugsweise eine Filterwirkung.

Die Hohlkörper 6, die bei der Herstellung im Schaum verbleiben und nicht nachträglich zerstört werden, können bei entsprechender Materialwahl auch für Matratzen benutzt werden, die im Pflegebereich Anwendung finden. Durch eine externe Vorrichtung, die den Innendruck im Hohlkörper 6 steuert, können die Hohlkörper 6 unterschiedlich und intervallmassig in ihrer Härte verändert werden. Das gleiche gilt auch für einen Sonderfall, bei dem die variablen Hohlkörper 10 im Schaum verbleiben.

Die dargestellten variablen Hohlkörper 10 sind fluchtend angeordnet und können sich auch direkt mit ihren Grundkörpern 16 berühren. In der rechten Bildhälfte von Fig. 5 ist eine andere Ausgestaltung eines variablen Hohlkörpers 10 gezeigt, der mehrere bauchige, wulstartige Abschnitte 18 und eingeschnürte Einschnitte 19 aufweist. Dadurch entsteht im Schaumstoffelement 1 ein Hohlraum 11 mit einer klar definierten Feverwirkung.

An den eingeschnürten Abschnitten dieses variablen Hohlkörpers 10 ist die Wandstärke der variablen Hohlkörperhülle vorzugsweise dicker als in den übrigen Abschnitten oder anderweitig verstärkt, insbesondere durch ein Gewebe.

Auch bei dieser Ausgestaltung kann der variable Hohlkörper 10 nach dem Auslassen des Fluids durch einen relativ engen Entnahmekanal 9 herausgezogen werden.

## Patentansprüche

1. Schaumstoffelement, insbesondere für Matratzen und Sitzmöbel aus PU-Schaum oder Latex, mit nach aussen im wesentlichen geschlossenen Hohlräumen (2), **dadurch gekennzeichnet, daß** die Hohlräume (2) durch in das Schaumstoffmaterial eines einstückigen Schaumstoffelements (1) eingeschäumte Hohlkörper (6) gebildet sind.

2. Schaumstoffelement nach Anspruch 1, **dadurch gekennzeichnet, daß** eine die Hohlkörper(6) beinhaltende flexible Luftpolster- oder Luftkammerfolie(4), insbesondere mit Durchbrüchen versehen, im Schaumstoffelement (1) angeordnet ist.

3. Schaumstoffelement nach Anspruch 1, **dadurch gekennzeichnet, daß** die Hohlkörper (6) bzw. deren Wandung (8) aus geschäumtem Thermoplast, z.B. Styropor, bestehen.

4. Schaumstoffelement nach einem oder mehreren der vorhergehenden Ansprüche, **dadurch gekennzeichnet,daß** die Hohlkörper in verschiedenen Bereichen unterschiedlich ausgeformt sind, in verschiedene Richtungen orientiert sind und/oder sich in verschiedenen Tiefen befinden

5. Schaumstoffelement nach einem oder mehreren der vorhergehenden Ansprüche, **dadurch gekennzeichnet, daß** die Hohlkörper (6) mit unterschiedlichen Fluiden (3), z. B. Gel, gefüllt sind.

6. Schaumstoffelement nach einem oder mehreren der vorhergehenden Ansprüche,**dadurch gekennzeichnet, daß** es mit einer oder mehreren Gewebeeinlagen(7), insbesondere über den Hohlräumen(6) verlaufend, verstärkt ist.

7. Schaumstoffelement nach einem oder mehreren der vorhergehenden Ansprüche, **dadurch gekennzeichnet, daß** die Wandung (8) der Hohlkörper (6) aus einem Material besteht, das sich in Wasser oder einem speziellen Lösungsmittel auflöst.

8. Verfahren zum Herstellen eines Schaumstoffelements (1), insbesondere für eine Matratze oder ein Sitzmöbel, aus PU-Schaum oder Latex mit im wesentlichen nach aussen geschlossenen Hohlräumen, **gekennzeichnet durch** folgende Schritte:
- Anordnen von Hohlkörpern (6,) in einer Form,
- Einbringen des Materials für das Schaumstoffelement (1) in die Form,
- Umschäumen der Hohlkörper (6) mit dem Material des Schaumstoffelements (1) während dessen Formung.

9. Verfahren nach Anspruch 8, **dadurch gekennzeichnet, daß** wenigstens eine Luftpolster- oder Luftkammerfolie (4) eingelegt wird, welche die Hohlkörper (6) aufweist.

10. Verfahren nach Anspruch 9, **dadurch gekennzeichnet, dass** dass ein genau gesteuertes Befüllen der Luftpolster- oder Luftkammerfolie(4) nach dem Aufschäumen, aber bevor der Schaum ausgehärtet ist, stattfindet.

11. Verfahren nach einem der Ansprüche 8 bis 10, **dadurch gekennzeichnet, daß** die Hohlräume (2) nachträglich mit Schaumstoff (3) ausgespritzt werden.

12. Verfahren nach einem der Ansprüche 8 bis 11, **dadurch gekennzeichnet, daß** nachträglich zumindest ein Teil der im Schaumstoffelement (1) angeordneten Hohlkörper (6) zerstört wird, insbesondere durch Aufstechen, Druck oder Wärme.

13. Verfahren zum Herstellen eines Schaumstoffelements (1), insbesondere für eine Matratze oder ein Sitzmöbel, aus PU-Schaum oder Latex, wobei das Schaumstoffelement (1) in einer Form geschäumt wird, **gekennzeichnet durch** folgende Massnahmen:
- Anordnen von befüllbaren variablen Hohlkörpern (10) in der Form, in die das Material für das Schaumstoffelement (1) eingebracht und aufgeschäumt wird,
- Befüllen der variablen Hohlkörper(10) mit Fluid oder Luft,
- Umschäumen der variablen Hohlkörper(10) mit dem Material des Schaumstoffelements (1) während dessen Formung,
- Evakuieren des Fluids bzw. der Luft aus den variablen Hohlkörpern (10), so dass sich die Umhüllung der variablen Hohlkörper (10) zusammenzieht, und
- Herausziehen der evakuierten variablen Hohlkörper (10) aus dem Schaumstoffelement (1) nach dem Aushärten, so dass entsprechende Hohlräume (11) im Schaumstoffelement (1) zurückbleiben.

14. Verfahren zum Herstellen eines Schaumstoffelements (1), insbesondere für eine Matratze oder ein Sitzmöbel, aus PU-Schaum oder Latex, wobei das Schaumstoffelement (1) in einer Form geschäumt wird, **gekennzeichnet durch** folgende Massnahmen:
- Anordnen von befüllbaren variablen Hohlkörpern (10) in der Form, in die das Material für das Schaumstoffelement(1) eingebracht und aufgeschäumt wird,
- Umschäumen der variablen Hohlkörper (10) mit dem Material des Schaumstoffelements (1) während dessen Formung,
- gesteuertes Befüllen der variablen Hohlkörper (10) mit Fluid oder Luft nach dem Aufschäumen, aber bevor der Schaum ausgehärtet ist,
- nach dem Aushärten Evakuieren des Fluids bzw, der Luft aus den variablen Hohlkörpern (10), so dass sich die Umhüllung der variablen Hohlkörper (10) zusammenzieht, und
- Herausziehen der evakuieren variablen Hohlkörper (10) aus dem Schaumstoffelement (1) nach dem Aushärten, so dass entsprechende Hohlräume (11) im Schaumstoffelement (1) zurückbleiben.

15. Verfahren nach Anspruch 13 oder 14, **dadurch gekennzeichnet, daß** die variablen Hohlkörper (10) von gegenüberliegenden Seiten des Schaumstoffelements (1) eingebracht werden.

16. Verfahren nach einem der Ansprüche 13 bis 15, **dadurch gekennzeichnet, daß** die verbleibenden Hohlräume (6) nachträglich ausgeschäumt werden.

17. Verfahren nach einem der Ansprüche 13 bis 16, **dadurch gekennzeichnet, daß** die Hohlräume (11) mit einem feuchtigkeitsregulierenden Material gefüllt werden.

18. Vorrichtung zum Herstellen eines Schaumstoffelements (1) mit einer Form, in die das Material für das Schaumstoffelement (1) eingebracht und in der es geschäumt wird, **dadurch gekennzeichnet, daß** die Form in ihrem Innenraum anzuordnende variable Hohlkörper(10) umfasst, die aus einer flexiblen Hülle (16) bestehen und mit Fluid oder Luft befüllbar sind.

19. Vorrichtung nach Anspruch 18, **dadurch gekennzeichnet, daß** die variablen Hohlkörper (10) einen schmalen Schaft (12) und einen grossvolumigen Grundkörper(11) aufweisen.

20. Vorrichtung nach Anspruch 18 oder 19, **dadurch gekennzeichnet, daß** der Schaftdurchmesser maximal 30% und insbesondere max. 15% der grössten Abmessung des Grundkörpers beträgt.

21. Vorrichtung nach einem der Ansprüche 18 bis 20, **dadurch gekennzeichnet, daß** die variablen Hohlkörper (10) auf zwei gegenüberliegenden Seiten der Form angeordnet sind und sich in gefülltem Zustand mittelbar unter Zwischenlage einer luftdurchlässigen Membran (17) berühren.

22. Vorrichtung nach einem der Ansprüche 18 bis 21, **dadurch gekennzeichnet, daß** die variablen Hohlkörper(11) mit mehreren bauchigen (18) und eingeschnürten (19) Abschnitten mehrfach tailliert sind.

23. Vorrichtung nach einem der Ansprüche 18 bis 22, **dadurch gekennzeichnet, daß** an den variablen Hohlkörpern kleine Auslassventile (20) angeordnet sind.

## Claims

1. A foam material element, in particular for mattresses and seating furniture, consisting of PU foam or latex with outwardly substantially closed cavities (2), **characterised in that** the cavities (2) are formed by hollow bodies (6) foamed in place in the foam material of a one-piece foam material element (1).

2. A foam material element according to Claim 1, **characterised in that** a flexible air cushion or air chamber film (4) containing the hollow bodies (6), in particular provided with openings, is arranged in the foam material element (1).

3. A foam material element according to Claim 1, **characterised in that** the hollow bodies (6) or their wall (8) consist of foamed thermoplastic, e.g. styrofoam.

4. A foam material element according to one or more of the preceding Claims, **characterised in that** the hollow bodies in different areas are of different form, are oriented in different directions and/or are situated at different depths.

5. A foam material element according to one or more of the preceding Claims, **characterised in that** the hollow bodies (6) are filled with different fluids (3), e.g. gel.

6. A foam material element according to one or more of the preceding Claims, **characterised in that** it is reinforced with one or more fabric inserts (7), in particular extending over the hollow bodies (6).

7. A foam material element according to one or more of the preceding Claims, **characterised in that** the wall (8) of the hollow bodies (6) consists of a material which dissolves in water or in a special solvent.

8. A method of producing a foam material element (1), in particular for a mattress or seating furniture, consisting of PU foam or latex with substantially outwardly closed cavities, **characterised by** the following steps:
- arranging hollow bodies (6) in a mould,
- introducing the material for the foam material element (1) into the mould,
- foaming the material of the foam material element (1) around the hollow bodies (6) while it is being moulded.

9. A method according to Claim 8, **characterised in that** at least one air cushion or air chamber film (4) is inserted which has the hollow bodies (6).

10. A method according to Claim 9, **characterised in that** accurately controlled filling of the air cushion or air chamber film (4) takes place after the foaming process but before the foam has cured.

11. A method according to any one of Claims 8 to 10, **characterised in that** the cavities (2) are subsequently injected with foam material (3).

12. A method according to any one of Claims 8 to 11, **characterised in that** subsequently at least some of the hollow bodies (6) arranged in the foam material element (1) are destroyed, in particular by being punctured, by pressure or heat.

13. A method of producing a foam material element (1), in particular for a mattress or seating furniture, consisting of PU foam or latex, wherein the foam material element (1) is foamed in a mould, **characterised by** the following measures:
- arranging fillable variable hollow bodies (10) in the mould, into which the material for the foam material element (1) is introduced and foamed,
- filling the variable hollow bodies (10) with fluid or air,
- foaming the material of the foam material element (1) around the variable hollow bodies (10) while it is being moulded,
- evacuating the fluid or the air from the variable hollow bodies (10) so that the encapsulation of the variable hollow bodies (10) shrinks, and
- removing the evacuated variable hollow bodies (10) from the foam material element (1) after curing so that corresponding cavities (11) remain in the foam material element (1).

14. A method of producing a foam material element (1), in particular for a mattress or seating furniture, consisting of PU foam or latex, wherein the foam material element (1) is foamed in a mould, **characterised by** the following measures:
- arranging fillable variable hollow bodies (10) in the mould, into which the material for the foam material element (1) is introduced and foamed,
- foaming the material of the foam material element (1) around the variable hollow bodies (10) while it is being moulded,
- controlled filling of the variable hollow bodies (10) with fluid or air after the foam is foamed but before the foam has cured;
- after curing, evacuating the fluid or the air from the variable hollow bodies (10) so that the encasing of the variable hollow bodies (10) shrinks, and
- removing the evacuated variable hollow bodies (10) from the foam material element (1) after curing so that corresponding cavities (11) remain in the foam material element (1).

15. A method according to Claim 13 or 14, **characterised in that** the variable hollow bodies (10) are introduced from opposite sides of the foam material element (1).

16. A method according to any one of Claims 13 to 15, **characterised in that** the remaining cavities (6) are subsequently filled with foam.

17. A method according to any one of Claims 13 to 16, **characterised in that** the cavities (11) are filled with a moisture-control material.

18. An apparatus for producing a foam material element (1) with a mould into which the material for foam material element (1) is introduced and in which it is foamed, **characterised in that** the mould comprises variable hollow bodies (10) to be disposed in its interior, which consist of a flexible casing (16) and which can be filled with fluid or air.

19. An apparatus according to Claim 18, **characterised in that** the variable hollow bodies (10) have a narrow shank (12) and a large-volume base member (11).

20. An apparatus according to Claim 18 or 19, **characterised in that** the shank diameter amounts to a maximum of 30 % and, in particular a maximum of 15 %, of the maximum dimension of the base member.

21. An apparatus according to any one of Claims 18 to 20, **characterised in that** the variable hollow bodies (10) are disposed on two opposite sides of the mould and in the filled condition contact one another indirectly with interposition of an air-permeable membrane (17).

22. An apparatus according to any one of Claims 18 to 21, **characterised in that** the variable hollow bodies (11) are multiply waisted with a plurality of bulging sections (18) and constricted sections (19).

23. An apparatus according to any one of Claims 18 to 22, **characterised in that** small outlet valves (20) are provided on the variable hollow bodies.

## Revendications

1. Elément en mousse notamment pour des matelas et des sièges en mousse de polyuréthane ou de latex avec des cavités (2) principalement fermées par rapport à l'extérieur,
**caractérisé en ce que**
les cavités (2) sont formées par des corps creux (6) enrobés par expansion dans la matière formant la mousse d'un élément en mousse (1) en une seule pièce.

2. Elément en mousse selon la revendication 1,
**caractérisé en ce qu'**
un film à coussins d'air ou à bulles d'air (4), souple, comportant les corps creux (6), notamment un film muni de passages, est prévu dans l'élément en mousse (1).

3. Elément en mousse selon la revendication 1,
**caractérisé en ce que**
les corps creux (6) ou leur paroi (8) sont en une matière thermoplastique expansée telle que par exemple du polystyrène expansé.

4. Elément en mousse selon l'une ou plusieurs des revendications précédentes,
**caractérisé en ce que**
les corps creux, dans différentes zones ont des formes différentes, sont orientés dans différentes directions et/ou se trouvent à différentes profondeurs.

5. Elément en mousse selon l'une ou plusieurs des revendications précédentes,
**caractérisé en ce que**
les corps creux (6) sont remplis de différents fluides (3) par exemple d'un gel.

6. Elément en mousse selon l'une ou plusieurs des revendications précédentes,
**caractérisé en ce qu'**
il est renforcé par un ou plusieurs inserts tissés (7) passant notamment sur les cavités (6).

7. Elément en mousse selon l'une ou plusieurs des revendications précédentes,
**caractérisé en ce que**
la paroi (8) des corps creux (6) est en une matière qui se dissout dans l'eau ou dans un solvant particulier.

8. Procédé de fabrication d'un élément en mousse (1) notamment pour un matelas ou un siège en mousse de polyuréthane ou latex ayant des cavités principalement fermées vers l'extérieur,
**caractérisé par** les étapes suivantes :
- mise en place des corps creux (6) dans un moule,
- introduction de la matière de l'élément en mousse (1) dans le moule,
- enrobage des corps creux (6) par expansion avec la matière de l'élément en mousse (1) au cours de son moulage.

9. Procédé selon la revendication 8,
**caractérisé en ce qu'**
on introduit au moins un film à coussins d'air ou à bulles d'air (4) comportant les corps creux (6).

10. Procédé selon la revendication 9,
**caractérisé en ce qu'**
on effectue un remplissage commandé de manière précise du film à coussins d'air ou à bulles d'air (4) après expansion mais avant durcissement de la mousse.

11. Procédé selon l'une des revendications 8 à 10,
**caractérisé en ce qu'**
on injecte de la mousse (3) dans les cavités (2) a posteriori.

12. Procédé selon l'une des revendications 8 à 11,
**caractérisé en ce qu'**
a posteriori on détruit au moins une partie des corps creux (6) dans l'élément en mousse (1), notamment en perçant, en pressant ou par élévation de température.

13. Procédé de fabrication d'un élément en mousse (1) notamment pour un matelas ou un siège en mousse de polyuréthane ou de latex, l'élément en mousse (1) étant expansé dans un moule,
**caractérisé par** les étapes suivantes :
- installation de corps creux (10) variables, susceptibles d'être remplis, dans le moule dans lequel on introduit la matière de l'élément en mousse (1) et on expanse,
- remplissage des corps creux variables (10) avec du fluide ou de l'air,
- enrobage par expansion des corps creux variables (10) avec la matière de l'élément en mousse (1) au cours de son moulage,
- évacuation du fluide ou de l'air des corps creux variables (10) pour que l'enveloppe des corps creux variables (10) se contracte, et
- extraction des corps creux variables (10), évacués hors de l'élément en mousse (1) après prise, de façon à laisser des cavités (11) correspondantes dans l'élément en mousse.

14. Procédé de fabrication d'un élément en mousse (1) notamment pour un matelas ou un siège en mousse de polyuréthane ou de latex selon lequel on expanse l'élément en mousse (1) dans un moule,
**caractérisé par** les opérations suivantes :
- mise en place de corps creux variables (10), susceptibles d'être remplis, dans le moule dans lequel on introduit la matière pour l'élément en mousse (1) et on expanse,
- enrobage par expansion des corps creux variables (10) avec la matière de l'élément en mousse (1) pendant son moulage,
- remplissage commandé des corps creux variables (10) avec du fluide ou de l'air après expansion mais avant prise de la mousse,
- après la prise, évacuation du fluide ou de l'air des corps creux variables (10) pour que l'enveloppe des corps creux variables (10) se rétracte, et
- extraction des corps creux variables (10), vidés de l'élément en mousse (1) après le durcissement de façon à laisser des cavités correspondantes (11) dans l'élément en mousse (1).

15. Procédé selon la revendication 13 ou 14,
**caractérisé en ce que**
les corps creux variables (10) sont introduits par les faces opposées dans l'élément en mousse (1).

16. Procédé selon l'une des revendications 13 à 15,
**caractérisé en ce qu'**
on remplit de mousse a posteriori les cavités (6) qui subsistent.

17. Procédé selon l'une des revendications 13 à 16,
**caractérisé en ce qu'**
on remplit les cavités (11) d'une matière régulant l'humidité.

18. Dispositif pour la fabrication d'un élément en mousse (1) comportant un moule dans lequel on introduit la matière de l'élément en mousse et où on l'expanse,
**caractérisé en ce que**
le moule comporte dans son volume intérieur des corps creux variables (10), à installer, qui se composent d'une enveloppe souple (16) et qui peuvent être remplis de fluide ou d'air.

19. Dispositif selon la revendication 18,
**caractérisé en ce que**
les corps creux variables (10) comportent une étroite tige (12) et un corps de base (11) de grand volume.

20. Dispositif selon les revendications 18 ou 19,
**caractérisé en ce que**
le diamètre de la tige représente au maximum 30 % et notamment au maximum 15 % de la plus grande dimension du corps de base.

21. Dispositif selon l'une des revendications 18 à 20,
**caractérisé en ce que**
les corps creux variables (10) sont prévus à deux côtés opposés du moule et à l'état rempli ils se touchent indirectement par l'intermédiaire d'une membrane (17) perméable à l'air.

22. Dispositif selon l'une des revendications 18 à 21,
**caractérisé en ce que**
les corps creux variables (11) sont mis en forme avec plusieurs segments ventrus (18) et des segments rétrécis (19).

23. Dispositif selon l'une des revendications 18 à 22,
**caractérisé en ce que**
les corps creux variables comportent des petites soupapes d'échappement (20).
